(19) Europäisches Patentamt European Patent Office Office européen des brevets

(11) **EP 2 433 030 B1**

(12) **EUROPEAN PATENT SPECIFICATION**

(45) Date of publication and mention
of the grant of the patent:
**29.03.2017 Bulletin 2017/13**

(21) Application number: **10731826.3**

(22) Date of filing: **19.05.2010**

(51) Int Cl.:
***F16H 3/72*** *(2006.01)*

(86) International application number:
**PCT/NL2010/050300**

(87) International publication number:
**WO 2010/134811 (25.11.2010 Gazette 2010/47)**

(54) **TRANSMISSION**

GETRIEBE

TRANSMISSION

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **19.05.2009 NL 2002905**

(43) Date of publication of application:
**28.03.2012 Bulletin 2012/13**

(73) Proprietor: **Mantel, Maria
3446 BC Woerden (NL)**

(72) Inventor: **VAN BEEK, Pieter, Erich
NL-3442 HS Woerden (NL)**

(74) Representative: **V.O.
P.O. Box 87930
2508 DH Den Haag (NL)**

(56) References cited:
**EP-A1- 0 075 667         EP-A1- 1 174 641
WO-A1-2006/123927    DE-A1- 19 714 528
DE-A1-102005 014 560   GB-A- 1 224 058
JP-A- 2004 190 850**

**Description**

The invention relates to a transmission, comprising a rotary shaft for coupling with a first drive element, provided with a wheel supported eccentrically and freely rotatably on the shaft for coupling with a second drive element, further comprising a ring arranged concentrically and rotatably with respect to the rotary shaft, which ring is provided with a first tread cooperating with the tread of the wheel and a second tread cooperating with the tread of an auxiliary drive element, such that rotation of the rotary shaft results in a corresponding circular revolving movement of the wheel about the centerline of the rotary shaft, while rotation of the wheel about its own axis depends on the rotation of the rotary shaft and on the rotation of the ring about the centerline of the rotary shaft

Such a transmission is known from WO 2006/123927. However, it has been found that in the variator embodiments, in which an auxiliary ring is used, the transmission does not function properly and stutters.

The invention contemplates a transmission which can form a variator between two drive elements, with which, while maintaining the advantages, the drawback mentioned can be obviated.

To this end, the invention provides the features of claim 1.

By driving the first and second auxiliary drive elements with one or more servomotors, a variator can be created with two control stages. However, the auxiliary drive elements may also be used for realizing branches or inputs with mutually different rotational speeds.

For bearing-mounting the rotating revolving movement, preferably one or more double bearings are provided which are each built up from a cylindrical first bearing eccentrically received in a second cylindrical bearing.

In an elegant manner, the bearings are not only designed for absorbing a radial force component, but also for absorbing an axial force component, for instance by designing the bearings as angular ball bearings.

By sealing the surfaces in which the bearings are located, a bearing shield can be formed.

Such a double bearing and/or bearing shield may be used in an advantageous manner for bearing-mounting the rotating revolving movement of the wheel or auxiliary wheel, but may, as will be explained hereinbelow, even in itself be used in an advantageous manner in a different environment, for instance for bearing-mounting a helical rotor of a PC pump conventionally driven with a cardan shaft transmission, Oldham coupling or flexible coupling.

In an advantageous embodiment, the transmission is coupled with a helical rotor so that a PC pump or PC motor can be formed.

Here, the wheel is preferably coupled with the rotor which is provided with at least one helical winding extending around a rotor centerline which is received in a stator.

By use of the transmission where the transmission ratio is chosen such that one revolution of the rotary shaft results in one opposite revolution of the wheel around its own axis, the revolution and rotation of the rotor can be driven without exerting radial force on the stator and, further, the rotor does not need to be guided by the stator surface anymore, but it can carry out an independent movement.

By receiving the free end of the rotor in the above-described double bearing, what can be achieved is that the rotor can be received in the stator opening with accurate fit and, if desired, without contact.

Rotor and stator may both be manufactured from relatively stiff material, in particular steel. Further, between rotor and stator, an accurate fit may be provided, so that the PC pump can be used as a compressor, or even as a motor.

In an advantageous manner, the stator has a thin-walled design. Here, on its outer surface, the stator may be provided with ribs extending in axial direction which can act as cooling ribs and/or stiffening ribs.

By designing the rotor to be thin-walled, what can be achieved is that it can be constructed to be relatively strong and light, while, further, there is a possibility of receiving the rotor in the cooling circuit.

If desired, the rotor can further be stiffened by receiving an internal profile in the rotor, for instance a helically wound box profile.

By having the diameter of stator and rotor shift along the centerline, a multi-stage pump or compressor can be formed.

In this manner, in the direction of movement from the cavity to the rotor/stator combination, one or more capacity shifts can be realized.

When, at the location of such a shift, a supply channel is provided which opens into the receiving opening, a mixing pump can be realized in an elegant manner.

When the rotary shaft is an input shaft, the rotor can be a displacement body of a pump, compressor or mixer.

When the rotary shaft is an output shaft, the rotor can be a displaced body of a motor, for instance a hydraulic motor or an internal combustion engine.

In an elegant manner, the parts of the sidewalls of the rotor running straight in cross section may further be provided with cavities located below the surface for realizing a resilient seal. Such cavities may, for instance, be filled with a liquid material, allowing a sealing protuberance to be created on the low-pressure side of the stator.

Such a cavity may, for instance, be formed by receiving a mounting slot in the stator wall, in which a hollow core strip optionally filled with liquid material can be received.

If desired, the cooperating surfaces of rotor and stator may also be provided with a lining material, such as a chemically resistant material, a wear-resistant and/or friction-reducing material.

Examples of such lining material are, for instance, PTFE or ceramic material.

The transmission will be explained in more detail on the basis of a number of examples which are shown in the drawing, in which:

Fig. 1 shows a schematic side elevational view of a not claimed transmission;

Fig. 2 shows a schematic front view of the transmission of Fig. 1;

Fig. 3 shows a schematic top plan view of the transmission of Fig. 1 coupled to a PC pump;

Figs. 4 shows a schematic front view of the stator of the PC pump in which the position of the stator is shown in successive steps with the corresponding positions of the transmission above them;

Fig. 5 shows a schematic longitudinal cross section of a thin-walled stator provided with cooling ribs;

Fig. 5A shows a cross section along the line A-A in Fig. 5;

Fig. 6 shows a schematic longitudinal cross section of a rotor-stator combination with shifting diameter;

Fig. 7 shows a schematic longitudinal cross section of a helical rotor of a PC pump bearing-mounted with an eccentric double bearing;

Fig. 8 shows a schematic front view of a variant of the transmission with free transmission ratio;

Fig. 9 shows a schematic side elevational view of the transmission of Fig. 8;

Fig.10 shows a schematic side elevational view of a multi-stage variant of the transmission;

Fig. 11 shows an exploded view of an input shaft with an eccentric wheel;

Fig. 12 shows an exploded view of an input shaft with four eccentric wheels;

Fig. 13 shows a perspective view of an input shaft with four eccentric wheels;

Fig. 14A shows a perspective view of a second input shaft;

Fig. 14B shows a cross section of a second input shaft;

Fig. 15A shows a perspective view of a first input shaft, a second input shaft and eccentric wheels;

Fig. 15B shows a cross section of a first input shaft, a second input shaft and eccentric wheels;

Fig. 16A shows a perspective view of a first input shaft, a second input shaft and eccentric wheels with rotations;

Fig. 16B shows a perspective view of a first input shaft, a second input shaft and eccentric wheels with rotations, with the second input shaft rotating as well;

Fig. 16C shows a side elevational view of an assembled wheel;

Fig. 16D shows a perspective view of a wheel manufactured in one piece;

Fig. 17A shows a perspective view of a transmission;

Fig. 17B shows a cross section of a transmission;

Fig. 18A shows a front view of a transmission with internal treads;

Fig. 18B shows a cross section of a transmission with internal treads;

Fig. 18C shows a perspective view of a transmission with internal treads;

Fig. 18D shows a perspective view of a transmission with internal treads with input shafts rotating oppositely to one another;

Fig. 19A shows a front view of a transmission with internal treads with small eccentricity;

Fig. 19B shows a cross section of a transmission with internal treads with small eccentricity;

Fig. 19C shows a side elevational view of a transmission with internal treads with small eccentricity;

Fig. 20 shows side elevational views and front views with shifting centerlines of the eccentric wheels;

Fig. 21 shows a side elevational view of a transmission with a central opening in the output shaft;

Fig. 22 shows a transmission with a second output shaft;

Fig. 23 shows a transmission according to the invention in which a servo drive of the second input shaft is replaced;

Fig. 24 shows a transmission in which the second output shaft is a rotor;

Fig. 25 shows a transmission in a complete pump drive; and

Fig. 26 shows a schematic perspective view of the different transmission ratios between the toothed wheel and the toothed ring on the one hand, and the toothed wheel and the auxiliary toothed ring

Fig. 26A shows a embodiment of the transmission, in which the transmission of Fig. 26 with the different ratios has been completed with a mirrored portion.

It is noted that the Figures are only schematic representations of preferred embodiments which are given by way of non-limiting exemplary embodiments. In the Figures, same or corresponding parts are designated by same reference numerals.

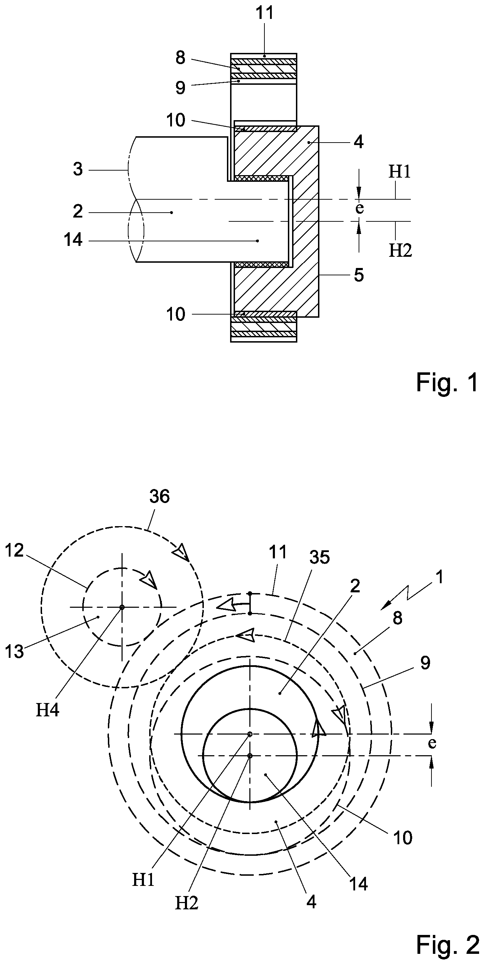

Figs. 1-4 show a transmission 1. The transmission 1 comprises a rotary shaft 2 arranged rotatably with respect to a centerline H1. The rotary shaft is designed for coupling with a first drive element 3, for instance an electric motor. The rotary shaft 2 is provided with a toothed wheel 4 supported eccentrically, with eccentricity e, on the rotary shaft 2.

The toothed wheel is supported on the rotary shaft 2 so as to be freely rotatable with respect to its own centerline H2. The toothed wheel 4 is designed for coupling with a second drive element 5, which is, for instance, connected with the rotor 6 of a PC pump 7.

The transmission 1 further comprises a toothed ring 8 arranged concentrically and freely rotatably about the centerline H1 of the rotary shaft 2. The toothed ring 8 is provided with a first toothing 9 cooperating with the toothing 10 of the toothed wheel 4.

The toothed ring 8 is further provided with a second toothing 11 cooperating with the toothing 12 of an auxiliary drive element 13.

In this not claimed transmission, the auxiliary drive element is a toothed wheel coupled with the rotary shaft 2 via a fixed transmission ratio. To this end, the rotary shaft supports a toothed wheel 35 arranged so as to rotate along about centerline H1, which toothed wheel 35 cooperates with a toothed wheel 36 which in turn rotates along with the auxiliary drive element 13 designed as a toothed wheel about an axis of rotation H4.

Here, the transmission ratio between auxiliary drive element 13 and rotary shaft 2 is such that one revolution of the rotary shaft 2 results in an opposite revolution of the toothed wheel 4 around the centerline H2 of its own shaft.

The toothed wheel 4 is mounted on an eccentric projection 14 of the rotary shaft 2, which is located inside the shaft diameter. Of course, it is also possible to provide a crank projecting with respect to the shaft, on which the toothed wheel can be mounted.

The rotor 6 of the PC pump is provided with one helical winding 15 extending around a rotor centerline H3. The rotor centerline runs substantially parallel, with eccentric intermediate distance e, with respect to the centerline H1 of the rotary shaft 2, which coincides with the centerline of the stator 16. The rotor 6 is received in a receiving opening 17 of the stator 16. The receiving opening 17 is provided with two helical cavities 18 extending substantially parallel at eccentric distance e with respect to the centerline H1 of the rotary shaft 2, which cavities are interconnected via the center area 19 of the stator 16.

The pitch of the helical windings 18 of the stator is two times the pitch of the helical winding 15 of the rotor 6. Thus, the number of helical windings 18 of the stator 16 is one higher than the number of helical windings 15 of the rotor 6.

The rotor 6 and the stator 16 are manufactured from steel or another similar, relatively stiff material. The cooperating surfaces of rotor and stator are provided with a lining, for instance a ceramic coating.

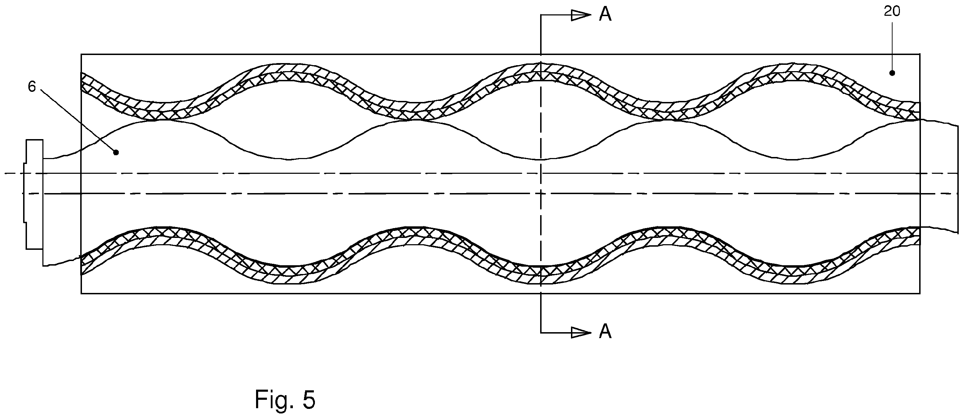

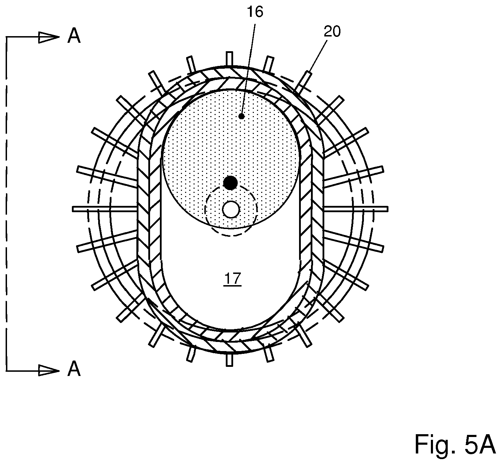

As shown in Fig. 5, the stator has a thin-walled design. On its outer surface, the stator 16 is provided with ribs 20 extending in axial direction which act as combined cooling and stiffening ribs.

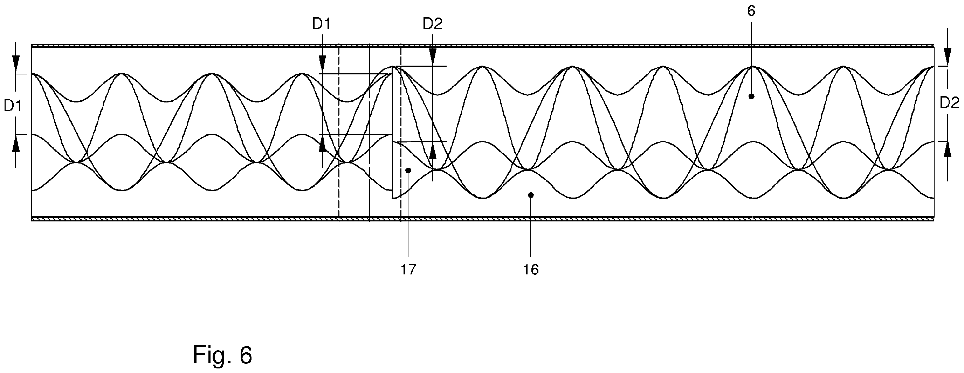

As shown in Fig. 6, rotor and stator are provided with a cross section shifting from a smaller diameter D1 to a larger diameter D2, so that the pump comprises two steps. When, at the location of the wider part with diameter D2, a channel which opens into the receiving opening 17 in the stator is provided, this channel can be used for feeding a substance to be mixed to the substrate to be pumped.

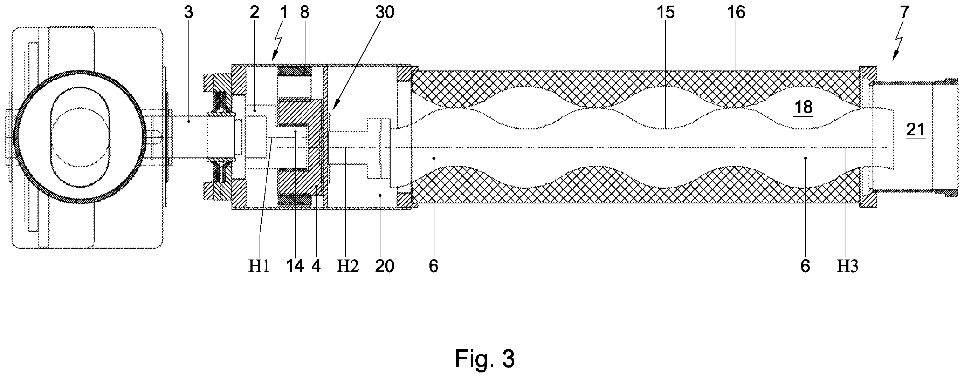

Fig. 3 shows that the PC pump 7 is provided with a cement slurry input 20 from which cement slurry is suctioned out with the aid of a displacement space moving as a result of the rotor 6 moving in the stator receiving opening and is pressed to a press output 21.

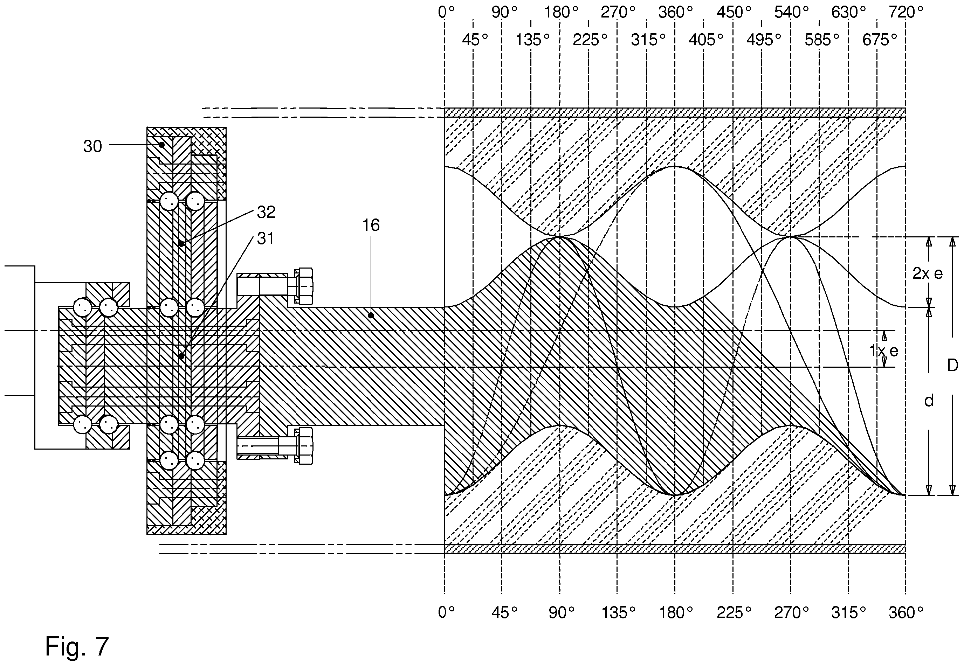

One side wall of the cement slurry input 20 is formed by a bearing shield 30. In Fig. 7, the bearing shield 30 is shown in more detail. The bearing shield bearing-mounts the rotating revolving movement of the rotor 6 and the toothed wheel 4 coupled therewith. The bearing shield is built up from a cylindrical first bearing 31 eccentrically received in a second cylindrical bearing 32. In order to absorb not only a radial force component, but also an axial force component exerted on the rotor by the slurry, the bearings 31 are each designed as double angular ball bearings. In order to prevent passage of slurry, the surfaces in which the bearings are located are sealed. In the embodiment as shown in Fig. 7, the double bearing can be used in an advantageous manner for a progressing cavity apparatus in which a helical rotor revolves rotatingly about its own longitudinal axis around the centerline of a stator in which the rotor is received eccentrically by guiding the side of the rotor which the transmission engages with the aid of an eccentric double bearing.

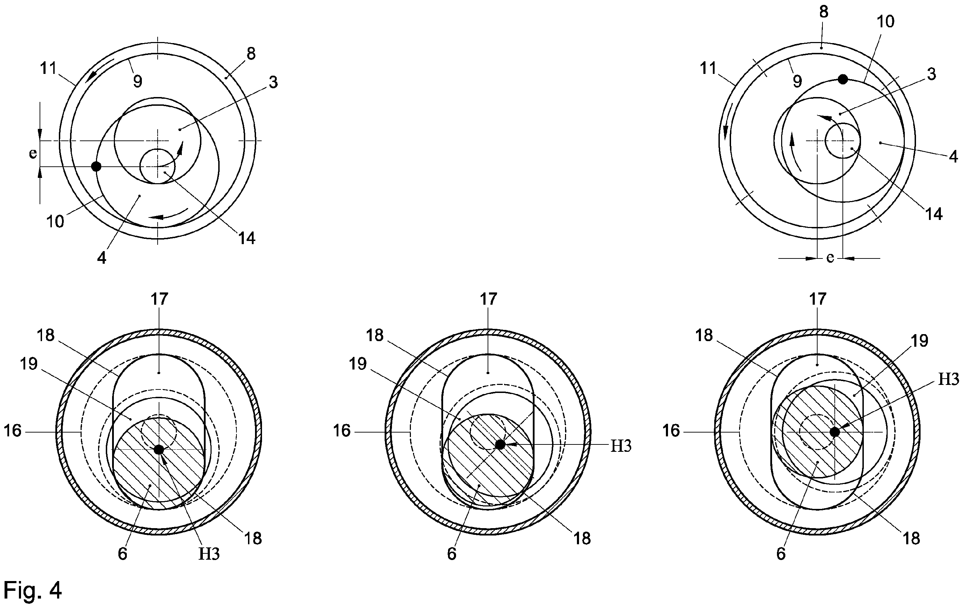

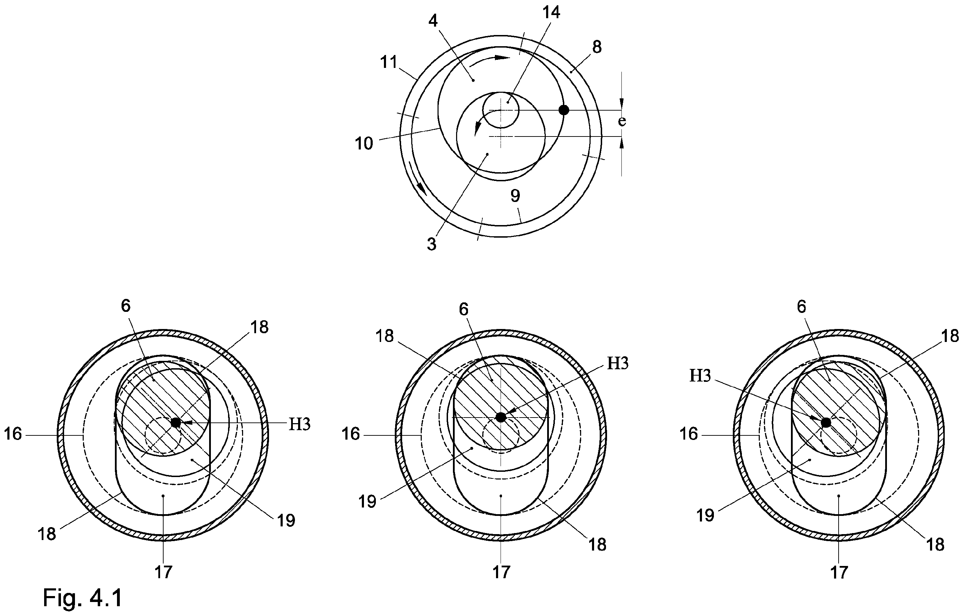

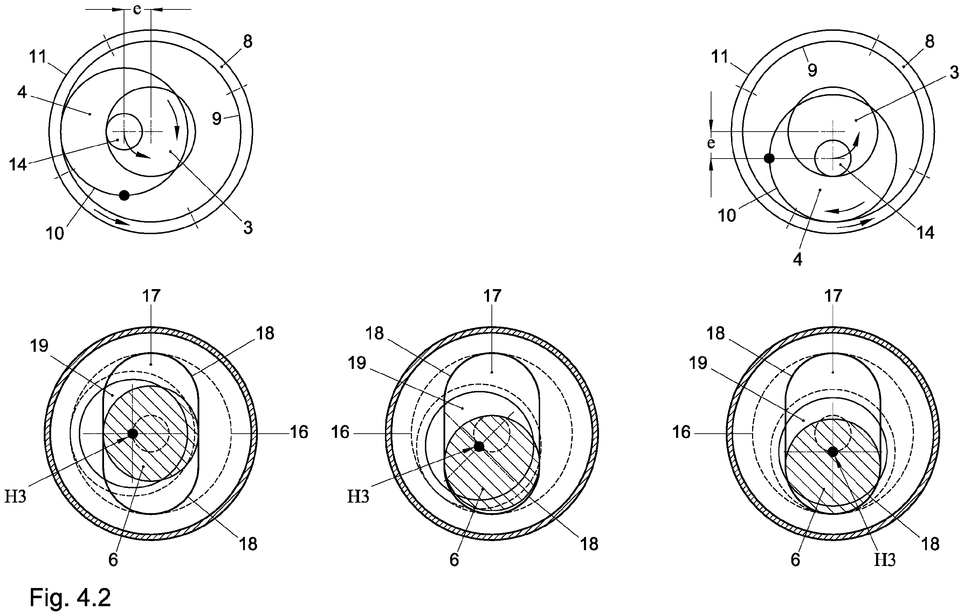

Figs. 4 shows how the stator proceeds through the successive steps when making one complete revolution. Here, the stator 16 rotates once in opposite direction about its own centerline H3. In the top representations of Figs. 4, it is shown that the toothed ring 8 is rotated to keep the rotation of the toothed wheel 4 about its centerline H2 limited to one complete rotation.

By using the transmission the rotor can be received in the stator with little play, so that use as a compressor or mud motor, or even internal combustion engine, is possible.

The free end of the rotor is then preferably bearing-mounted, for instance with the aid of the above-described double eccentric bearing.

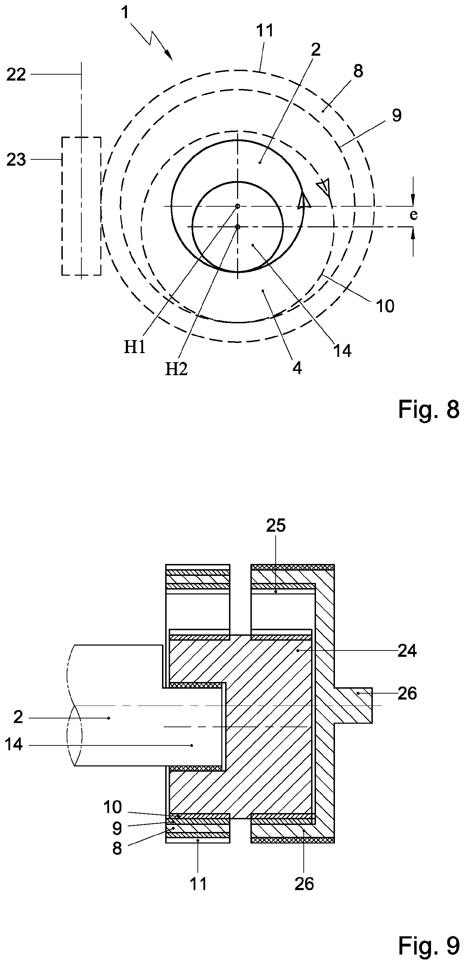

In an elegant manner, the auxiliary drive element 13 can be coupled with a servomotor. In this manner, a variator can be formed. This is schematically shown in Fig. 8 with the aid of a worm 23 driven by an auxiliary electric motor (not shown) and cooperating with a corresponding worm wheel toothing 11 on the outside of the toothed ring 8. With the aid of such a construction, the transmission ratio between auxiliary drive element and rotary shaft can be chosen freely so that, per circular revolving movement of the toothed wheel, the corresponding number of rotations of the toothed wheel about its own axis can be set freely. By elegantly providing an axial continuation 24 of the toothed wheel 4, the toothed wheel can further be designed for cooperating with a toothing 25 of an auxiliary toothed ring 26 arranged concentrically with the rotary shaft 2. Here, the auxiliary toothed ring 26 is designed as an end auxiliary ring. Here, the ring 26 supports a further rotary shaft 27 providing the coupling with the second drive element 5 and arranged co-parallel with the rotary shaft. In this manner, as shown in Fig. 9, a continuously variable transmission can be realized in an elegant manner.

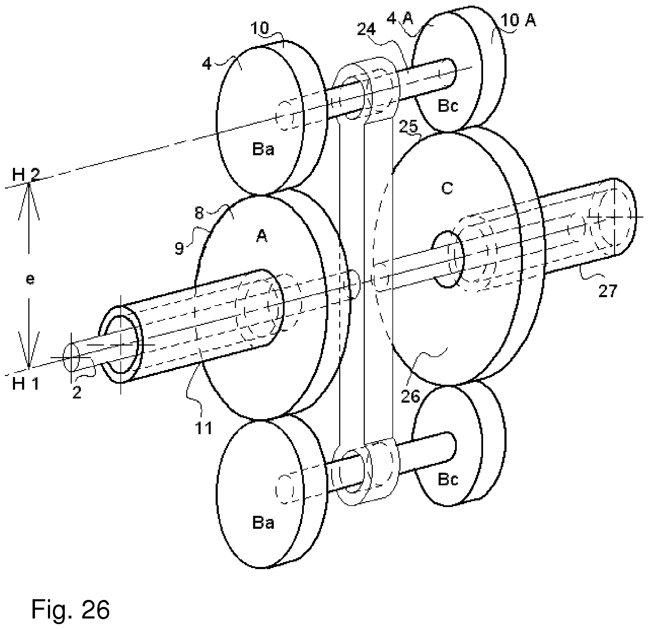

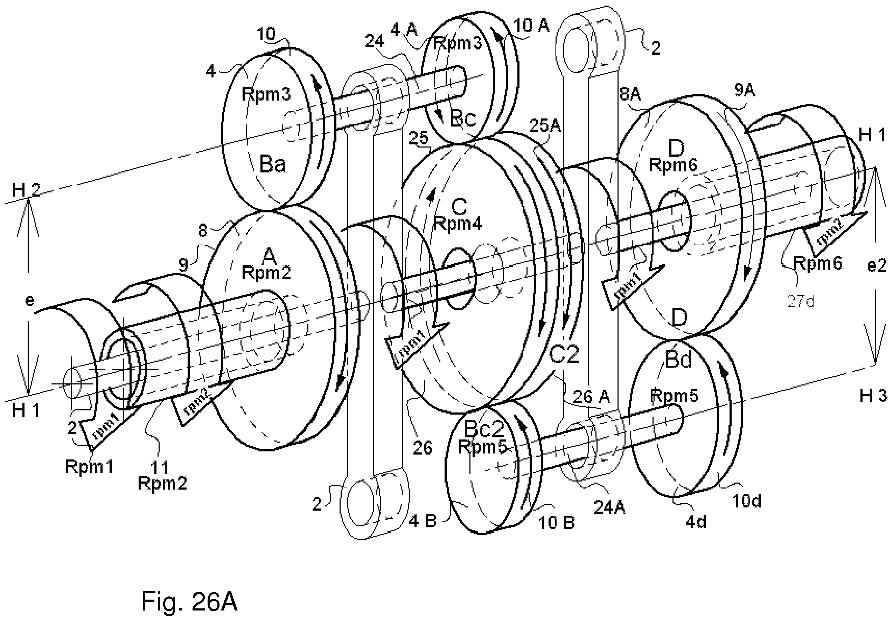

In accordance with the invention, the toothed wheel 4 cooperates with the tread, e.g. formed by toothing 25, of the auxiliary ring 26 in a different transmission ratio as with which the toothed wheel 4 cooperates with the ring 8. The toothed wheel 4 may for example thereto comprise a wheel portion 4a which has been provided with toothing 10a. This has been shown in Fig. 26. In this example, the wheel portion 4a has a smaller diameter than the wheel 4, and the toothing 10a has fewer teeth than toothing 10. It has been found that this prevents stutter in the transmission that occurs when the transmission ratios would be the same. By providing the different transmission ratios as set out above, the transmission runs smoothly. In the not claimed transmissions described here in relation to figures 9 - 25, it is to be understood that although drawn to have the same transmission ratios, the transmission ratios between the toothed wheel and the toothed ring on the one hand, and the toothed wheel and the auxiliary toothed ring on the other may for the purposes of this disclosure to be assumed to be different, i.e. as for example shown in figures 26 and 26A.

Fig. 26A shows a embodiment of the transmission, in which the transmission of Fig. 26 with the different ratios has been completed with a mirrored portion. This is a particularly advantageous configuration of the variable transmission of the invention wich allows for limitary slip transition, which shall be referred to as VB4D.

The variable transmission VB4D is fed using two drives:

- Drive 1 (for example a variable, non reversible internal comustion engine ICE), and
- Drive 2 (for example an inverter controlled electromotor MG2)

Both drives may be independently switched on and off, and may be controlled independently, but serve the same purpose of driving outgoing axis 27d in an rpm range that includes two rotational directions as well as a point with 0 rpm. Each drive transmits variable motion to free outgoing ring wheel C, and the motion of ring wheel C is the resulting sum.

Drive 1 rotates the carrier with gear wheels B clockwise around gearwheel A. This causes gear wheels B to rotate clockwise. The gear wheels B in turn drive the ring wheel C to rotate counterclockwise. Drive 2 of the gear wheel A may also drive the gear wheel A clockwise. This causes the gear wheels B to rotate counterclockwise. The gear wheeld B in turn drives the ring wheel C to turn clockwise.

The axial rotation of the gear wheels Ba is the sum of two rotational directions that each result from one of the drives 1 and 2.

In this transmission, the following formulas may be applied for calculation.

Formula 1) Rpm and rotational direction of Ba by Drivel is:

$$(nDrive1 * zA) \div zBa$$

Formula 2) Rpm and rotational direction of Ba by Drive2 is:

$$((nDrive2 * zA) \div zBa) * \text{-}1$$

The resulting rpm and its rotational direction is the sum of formulas 1 and 2 and reads: n Ba_Bc = ((n Drivel * z A) ÷ z Ba) + (((n Drive2 * z A) ÷ z Ba) * -1)

The rotation of gear wheel C is the sum of the two drives:

Formula 3) the rotation of Bc on C with "n Ba-Bc" being: ((n Ba-Bc * z Bc) ÷ z C) * -1
Formule 4) Drivel pulls gear Wheel C with Epicycle Ba into orbit and is: n Drivel

The resulting rpm n C and the rotational direction is the sum of formulas 3 and 4 and reads: n C = (((n Ba_Bc * z Bc) ÷ z C) * -1) + n Drivel

Note that because in Fig. 26A, gear Wheel C en C2 form one whole, n C equals n C2.

The axial rotation of gearwheels Bc2 is the sum of two rotations that in turn each result from one of drives C2 and drive 1.

Formula 5) rotation of Bc2 by nC2 is: ((nC2 * zC2) ÷ zBc2) * -1

Formula 6) rotation of Bc2 via epicycle Ba on C2 by Drive1:(nDrive1*zC2)÷zBc2

The resulting rpm and drive sign is the sum of formulas 5 and 6 and reads: n Bc2_Bd= (((nC2 * z2) zBc2) * -1) + ((n Drivel * z C2) ÷ z Bc2)

The rotation of gear Wheel D is the sum of two drives:

Formule 7) the rotation of Bc2 onto D with "n Bc2_Bd" is: ((nBc2_Bd * zBd)÷ zD) * -1

Formule 8) Drivel pulls the Wheel Bd with Epicycle Bc2 in orbit and is: n Drivel

The resulting rpm n C and its sign is the sum of formule 7 en 8 and reads: n D = (((n Bc2_Bd * z Bd) ÷ zD) * -1) + n Drivel

Table 1 below lists exemplary values for the parameter used in the calculations of this example.

Table 1:

| #1) MG2 (pos.2) | | |
|---|---|---|
| max. efficiency at | | g/kWh |
| max. power at | | g/kWh |
| | | g/kWh |
| #2) MG2 (pos.11) | | |
| at least | +10%= | g/kWh |
| | from 0 to 1.200 rpm | 400 Nm |
| | at 1.200 rpm | 50 kW |

| # of Gears Ba.Bc 6 | | | Bc2,Bd 6 |
|---|---|---|---|
| Ba z20 | Be z17 | Bc2 z17 | Bd z24 |
| A z33 | C z36 | C2 z39 | D z32 |
| m3 | m 3 | m 3 | m 3 |
| e79,5 | = e79,5 | e84 | = e84 |

Tables 2 below lists a number of results of calculations using the above formulas and parameter values of table 1. It can be taken form Table 2 that the transmission ratios of Ba-Bc and Bc2-Bd are identical, but mirrored. In this configuration, drive n#2 determines the resulting outgoing rpm n D. The outgoing shaft may be still, while drive n #1 runs. Drive #1 may run at any speed. There is therefore no clutch needed between the internal combustion engine n#1 and the transmission. It can be taken from table 3 that without stopping or reversal of the drives n#1 and n#2, and without using a slip clutch or reversing cutch, the outgoing axis D may be stopped and reversed. This may for example significanty reduce peak loads when reversing the rotational direction of large cement mixers when switching form loading to unloading. Further, it may simplify and increase the efficiency in manouvering of ships, as engines or turbines need not be stopped and reversed. In addition, trimming of for example evelators in airplanes may be carried out with a simple driving dual drive arrangement via the proposed transmission instead of using complex hydraulics.

Table 2:

| Examples | #1 man drive | netto | resulting | resulting | resulting | **resulting** |
|---|---|---|---|---|---|---|
| | #2 auxiliary dive | | | | | |
| Drives: | rpm. input | kW input | n Ba_Bc | n C_C2 | nBc2_Bd | **n D** |
| n#1 ex.a | 1.20rpm | 50 kW | 1.980rpm | 1.200opm | 2.753rpm | 1.200rpm |
| n#2 ex.a | **510rpm** | 22 kW | -842rpm | -538rpm | -1.520rpm | -925rpm |
| | | 72 kW | 1.139rpm | 662rpm | 1.233rpm | **275rpm** |
| n#1 ex,b | 1.200rpm | 50 kW | 1.980 rpm | 1.200rpm | 2.753rpm | 1.200rpm |
| n#2 ex.b | **305rpm** | 9 kW | -503rpm | -697rpm | -1.153rpm | -1.200rpm |
| | | 59 kW | 1,477rpm | 503rpm | 1.600rpm | **0rpm** |
| n#1 ex.c | 1.200rpm | 50 kW | 1.980rpm | 1.200rpm | 2.753rpm | 1.200rpm |
| n#2 ex.c | **100rpm** | 2 kW | -165rpm | -857rpm | -787rpm | -1.475rpm |

(continued)

| Examples | #1 man drive #2 auxiliary dive | netto | resulting | resulting | resulting | **resulting** |
|---|---|---|---|---|---|---|
| Drives: | rpm. input | kW input | n Ba_Bc | n C_C2 | nBc2_Bd | **n D** |
| | | 52 kW | 1.815rpm | 343rpm | 1.966rpm | *-275rpm* |
| n#1 ex.d | 20rpm | | 32rpm | 20opm | 45rpm | 20rpm |
| *n#2 ex.d* | **5rpm** | | *-8rpm* | *-11rpm* | -19rpm | -20rpm |
| | | | 24rpm | 8rpm | 26rpm | **Orpm** |
| negative numuers refer to anti-clock rpm or torque | | | formula 1) Formula 2) | formula 4) formula 3) | formula 5) formula 6) | formula 8) formula 7) |

With the aid of such a continuously variable transmission, a completely stepless variable output rotational speed from 0 to the maximum rotational speed can be realized in both directions of rotation. With a rotating input shaft, the output shaft can be stopped without uncoupling being necessary. Very low creeping speeds can be set, so that a lower power of the drive source can be chosen and/or a high torque is available.

The transmission is 100% slip-free and has a very high efficiency.

The dimensions are compact, while the construction is relatively simple and comprises few parts.

Such a variator may, for instance, be used for driving vehicles, hoists, agricultural machines, for propelling ships or for driving tools.

With the variator, a fixed connection remains present between the input shaft and output shaft at all times. With the aid of the variator, the output shaft of the drive can be stopped. Thus, when it is, for instance, controlled with the aid of an electronic control unit, the variator can excellently be used as a transmission in a car, while, also, functions like ESP or ABS can be realized via the transmission. It is noted that a ring like the auxiliary ring cannot only, as shown here, comprise a ring with inner toothing, but also a ring with outer toothing more closely resembling a wheel.

In a car or truck, in this manner, wheels can be driven directly via the transmission with an electric motor. In this manner, each wheel can be designed with its own drive motor.

The transmission can then be received in the rotor kit of the electric motor to thus obtain the most compact possible dimensions.

With respect to a wheel driven directly with an electric motor controlled with the aid of a frequency control, thus the advantage is achieved that the electric motor can have a relatively light design. This is because, with the aid of the transmission, the torque can be converted for, for instance, accelerating from a standstill. Further, with the aid of the transmission, the rotational speed of the output shaft can be controlled to zero. With the aid of the transmission, the rotating electric motor can be used to retain the output shaft when the output shaft stands still, so that the output shaft is blocked.

Use of such a wheel directly driven via the transmission with the aid of an electric motor in a vehicle yields numerous advantages. Thus, the conventional shaft sets and differentials can be omitted and batteries or fuel cells can be placed in the space which has become available.

The center of gravity of the vehicle can be lowered much and due to the different construction of the vehicle, more usable space becomes available. Further, in this manner, a trailer can simply be designed as a trailing device.

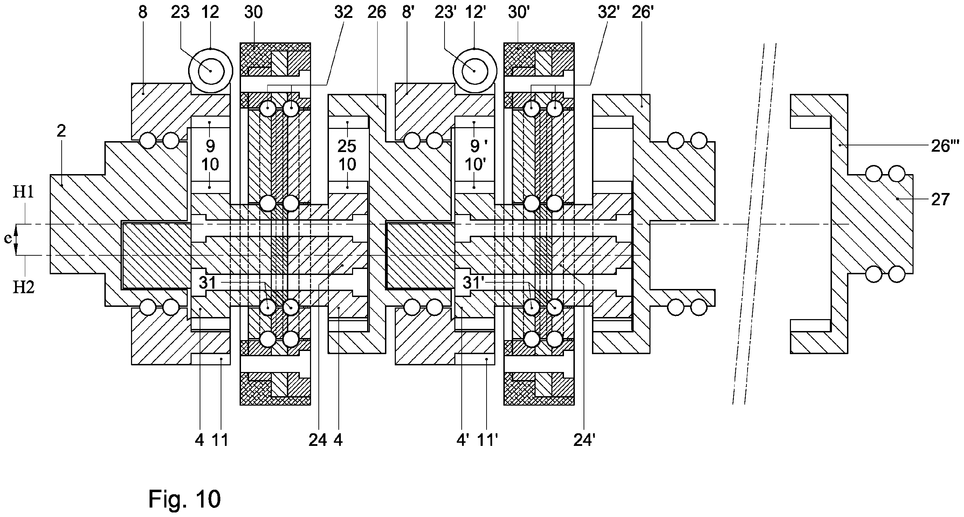

Fig. 10 shows a schematic side elevational view of a multi-stage variant of the transmission. In this embodiment, a second toothed ring 8' arranged concentrically and rotatably with respect to the rotary shaft is provided. The second toothed ring 8' is provided with an inner toothing 9' cooperating with the toothing 10' of an auxiliary wheel 4'. The second toothed ring 8' is provided with an outer toothing 11' cooperating with the toothing 12' of a second worm 23 driven by a second servomotor 22' (not shown).

An axial continuation 24' of the auxiliary toothed wheel 4' cooperates with a second auxiliary ring 26'. The second auxiliary ring 26' can form an end auxiliary ring supporting a further rotary shaft 27 or can, in turn, form a second intermediate auxiliary ring for making a third stage.

By driving the first and second worms 23, 23' with servomotors 22, 22', a variator can be created with two control stages. However, the worms 23, 23' may also be used for realizing shaft branches with mutually different rotational speeds.

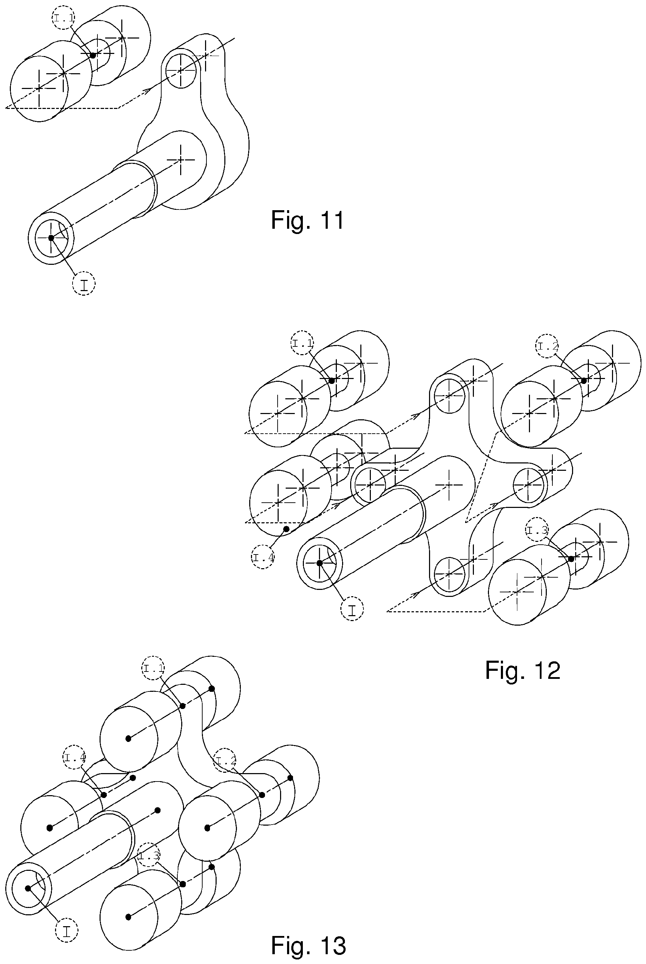

For further elucidation, the transmission is again explained in the following with reference to Figs. 11-25.

The VanBeek-4D transmission, hereinafter to be referred to as VB4D and/or 4D is a drive reductor for use as:

a - a continuously variable drive reductor with an endless ratio from 0 (zero) to Overdrive;

b - a drive reductor with a fixed transmission ratio for ratios from > 0;
c - a drive reductor with a fixed transmission ratio for driving
c1 - eccentric helical worm rotors, *inter alia* also known as worm gear pump;

Schneckenpumpe and Exzenter-Schneckenpumpe, Progressive Cavity Pump (PCP) and Progressive Cavity Motor (PCM).

The 4D transmission is based on 3 elementary main parts I, II and III

I - central first input shaft with minimally one eccentric wheel (1.1-I.n)
II - central second input servo with at least one centric wheel
III - use-dependent station (a,b,c) or eccentric (c1) output shaft with at least one wheel

General Wheel characteristics:

The wheel treads of the elementary main parts I, II and III may

d) have any design;
e) have any position on the respective wheel, while
f) the movement functions remain unchanged mutually with one another and with respect to one another and jointly

Wheel Tread examples are: metal tread, plastic, rubber, friction with friction oil, toothed, etc., etc.

Tread Exemplary embodiment: if toothed, possible toothings are *inter alia* straight, helical, hypoid, conical toothing, etc. and possible positions for this are on the outer circumference, on the inside, and/or on the side of wheel

Part descriptions

Part I is a central input shaft with at least one eccentric wheel from 1.1 to I.n.

Fig. 11 shows an input shaft I for one eccentric wheel I.1.

Fig. 12 shows an input shaft I for four eccentric wheels 1.1-1.4.

Fig. 13 shows an input shaft I with four eccentric wheels I.1-I.4.

Part II is a central second input servo with at least one centric wheel tread.

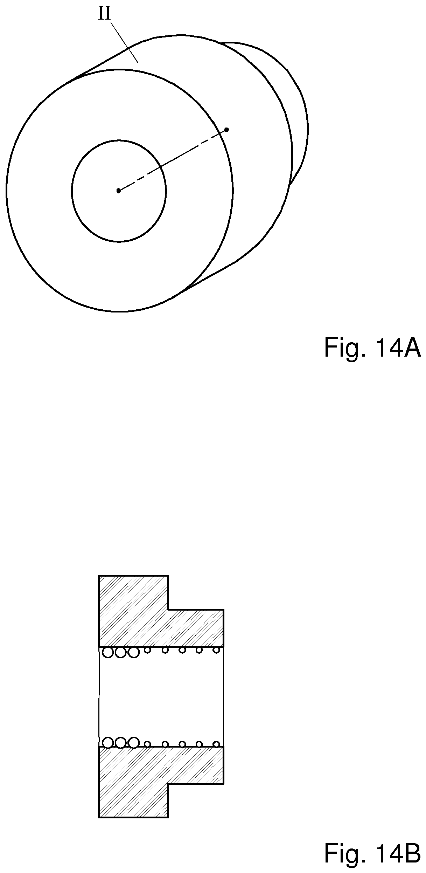

Fig. 14 shows the second input servo shaft as a concentric wheel. Fig. 14A shows part II in perspective view. Fig. 14B shows part II in cross section.

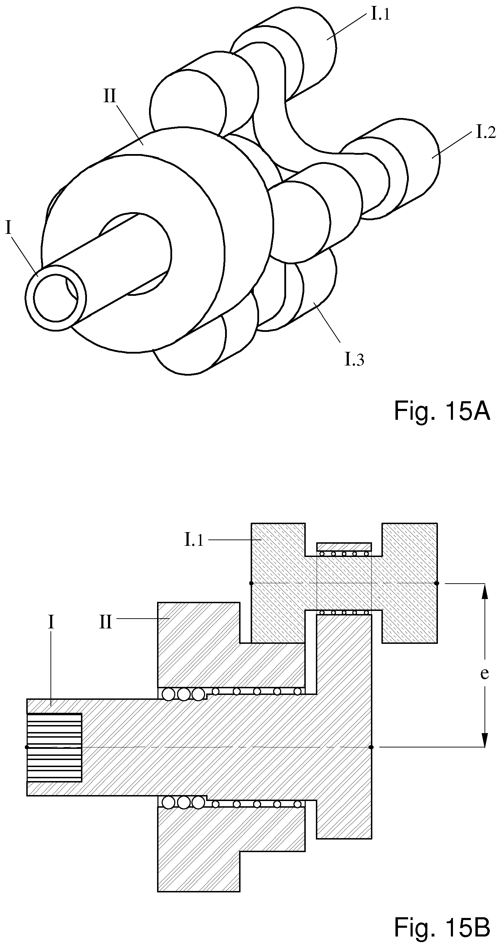

Fig. 15 shows the assembly with the first input shaft I. Fig. 15A shows parts I and II in perspective view. Fig. 15B shows parts I and II in cross section. The distance between the centerline of eccentric wheel 1.1 and the centerline of part I is the eccentricity 'e'.

The second central input shaft - wheel II - is freely rotatably mounted on the central first input shaft I with a bearing.

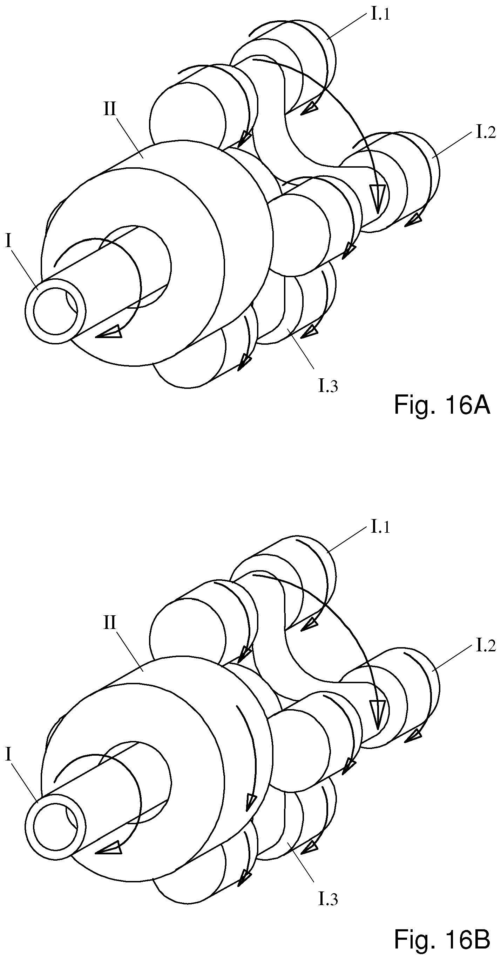

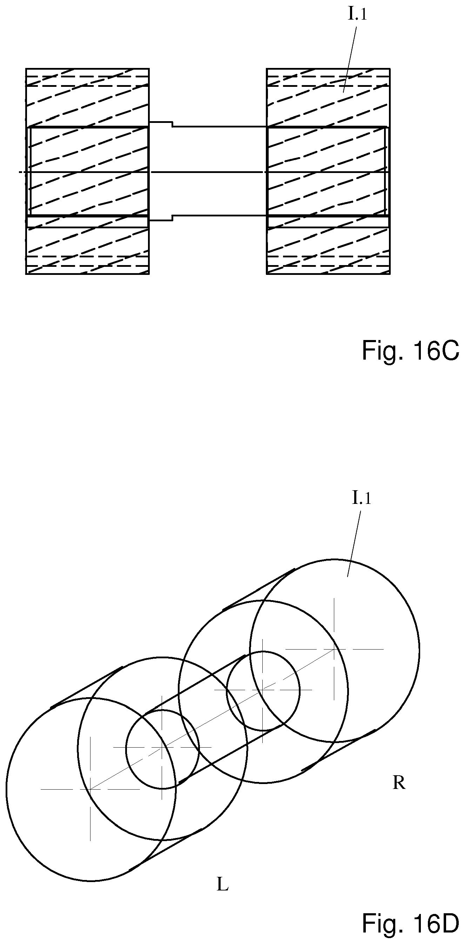

In Fig. 16A, the rotations are made visible which occur when the first input shaft I is driven and the second input shaft II is kept still by the second servomotor.

Suppose that the first input shaft I rotates at 1,000 rev/min.

The eccentric wheels 1.1-1.4 are bearing-mounted at distance 'e' from the centerline of the first shaft I and therefore always rotate at the same speed and direction of rotation as the first shaft I, so at 1,000 rev/min.

The tread of each eccentric wheel directly abuts the stationary tread of the wheel II kept still. If they are toothed, they are even anchored in one another. This ensures that the eccentric wheels need to rotate about their own axes.

For the sake of simplicity, we now suppose that the diameter of wheel II, at the location of the tread, is equal to two times the diameter of the eccentric wheels. So, the diameter ratio between the eccentric wheels I.1-I.4. and the concentric wheel II is 1 : 2. The speed at which the eccentric wheels then rotate about their own axes is therefore 2,000 rev/min.

Fig. 16B shows first input shaft I with eccentric wheels 1.1-1.4 and second input shaft II. The second input shaft II now rotates as well. The direction of rotation of first input shaft I and second input shaft II and the eccentric wheels is indicated with the aid of arrows. A second drive now also drives the second input shaft II to the right and suppose this is done at a speed of 1 rev/min. The first shaft I continues to rotate at 1,000 rev/min to the right without change. Because the tread of II rotates in the same direction as I, the rotational speed of the eccentric wheels at which they rotate about their own axes will decrease. However, this is not the speed at which they rotate about the central centerline with shaft I; this remains 1,000 rev/min. The rotational speed of the eccentric wheels about their own centerline is decelerated, the reduction being equal to 1 rev/min of wheel II because it runs along in the same direction. Because one revolution of wheel II is equal to two revolutions of an eccentric wheel, the own rotation of these wheels is reduced by 2 rev/min, so from 2,000 to 1,998 rev/min. So, the eccentric wheel or assembly of eccentric wheels revolves at 1,000 rev/min with the central first shaft I to the right around the centerline of the transmission, while it further rotates at 1,998 rev/min (also to the right) about its own wheel axis.

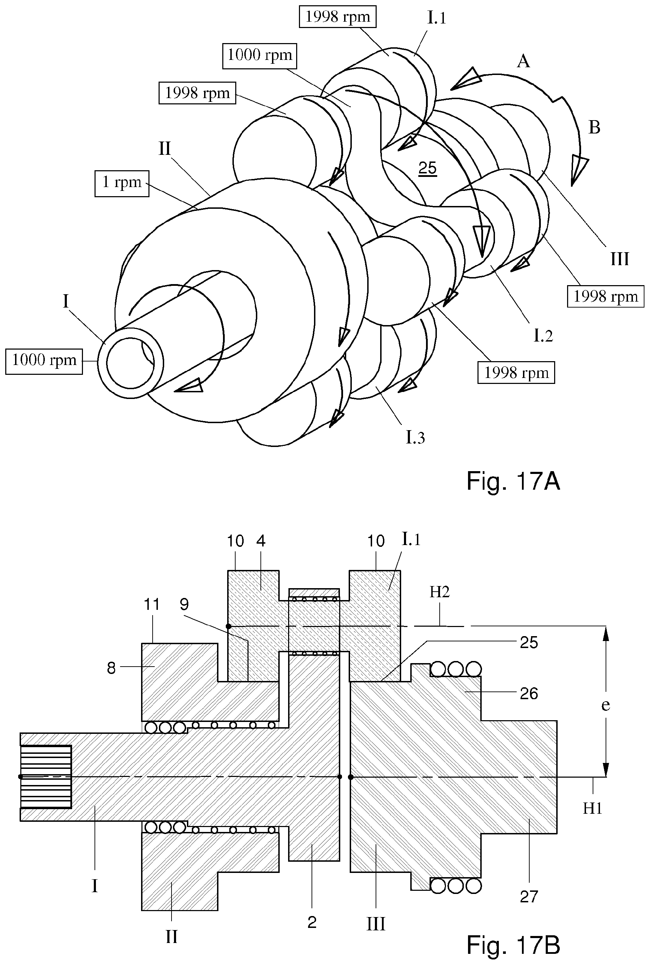

Fig. 17 represents the first input shaft I with eccentric wheels I.n and the second input shaft II. Further, Fig. 17A further shows a third input shaft III. Fig. 17A shows the configuration in perspective view. Fig. 17B shows the shafts I, II and III and a wheel I.1 in cross section. The above-discussed movements and their results are shown in Fig. 17A where they become manifest.

At the transmission output, arrows A and B indicate opposite directions of rotation of element III. The output shaft - element III - indeed simultaneously carries out two completely opposite movements. The tread of eccentric wheel 1.1 makes the tread 25 of the output shaft III rotate at 1,998 + ratio 2 = 999 rev/min to the left and that is direction A. At the same time, eccentric wheel 1.1 takes that same tread 25 along in direction B at the speed of the input shaft I = 1,000 rev/min. So, the resulting speed between A and B is 1 rev/min. Since B is greater than A, the direction of the resultant is in direction B, so to the right. In this manner, a variable transmission is realized with ratios from zero to Overdrive.

The transmission as shown in Fig. 17B comprises a rotary shaft I, 2 for coupling with a first drive element. The rotary shaft I, 2 is provided with a wheel 1.1, 4 eccentrically and freely rotatably supported on the shaft I, 2 for coupling with a second drive element. The transmission further comprises a ring II, 8 arranged concentrically and rotatably with respect to the rotary shaft I, 2, which ring II, 8 is provided with a first tread 9 cooperating with the tread of the wheel I.1, 4. The ring II, 8 is further provided with a second tread 11 cooperating with the tread of an auxiliary drive element - not shown here - such that rotation of the rotary shaft I, 2 results in a corresponding circular revolving movement of the wheel I.1, 4 about the centerline H1 of the rotary shaft I, 2. Rotation of the wheel I.1, 4 about its own axis H2 depends on the rotation of the rotary shaft I, 2 and on the rotation of the ring II, 8 about the centerline H1 of the rotary shaft I, 2. Further, the wheel 1.1, 4 cooperates with a tread 25 of an auxiliary ring 26 arranged concentrically with the rotary shaft I, 2 in a same transmission ratio as with the ring II, 8. Here, the auxiliary ring 26 is designed as an end auxiliary ring. Here, the ring 26 supports a further rotary shaft III, 27 arranged co-parallel with the rotary shaft.

Calculation examples Fig.17A

Tread diameters: input shaft II = output shaft III (fixed condition)
Eccentric wheel 1.1 = 0.5 x input and output shafts II and III = ratio 2 (no fixed condition, 'accidentally' holds in this example)
Eccentric wheel 1.1 = eccentric wheel I.2-I.n (fixed condition if more than one eccentric wheel is used)
Left tread diameter of eccentric wheel 1.1 = Right tread diameter of eccentric wheel 1.1, with identical toothing position.

Example 1

| | |
|---|---|
| first input shaft I | 1,000 rpm to the right |
| second input shaft II | 0 rpm |
| third output shaft III | ? rpm |

relative n of input shaft I with respect to input shaft II = 1,000 rpm to the right
n of eccentric wheel 1.1 = 1,000 x 2 = 2,000 rpm to the right so that output shaft III 2,000 ÷ 2 = 1,000 rpm to the left = A, but eccentric wheel I.1 also circulates to the right at 1,000 rpm = B
The resultant of A and B = 0 rpm = n of output shaft III

Example 2

| | |
|---|---|
| first input shaft I | 1,000 rpm to the right |
| second input shaft II | 0 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A, but eccentric wheel I.1 also circulates to the right at 1,000 rpm = B
The resultant of A and B = 1 rpm to the right = n of output shaft III

Example 3

| first input shaft I | 8,000 rpm to the right |
|---|---|
| second input shaft II | 1,200 rpm to the right |
| third output shaft III | ? rpm |

relative n of input shaft I with respect to input shaft II = 6,800 rpm to the right
n of eccentric wheel 1.1 = 6,800 x 2 = 13,600 rpm to the right so that output shaft III 13,600 ÷ 2 = 6,800 rpm to the left
= A, but eccentric wheel 1.1 also circulates to the right at 8,000 rpm = B
The resultant of A and B = 1,200 rpm to the right = n of output shaft III

Example 4

| first input shaft I | 1,500 rpm to the right |
|---|---|
| second input shaft II | 200 rpm to the left |
| third output shaft III | ? rpm |

relative n of input shaft I with respect to input shaft II = 1,700 rpm to the right
n of eccentric wheel 1.1 = 999 x 2 = 1,998 rpm to the right so that output shaft III 1,998 ÷ 2 = 999 rpm to the left = A,
but eccentric wheel 1.1 also circulates to the right at 1,000 rpm = B
The resultant of A and B = 1 rpm to the right = n of output shaft III

Example 5

| first input shaft I | 1,000 rpm to the right |
|---|---|
| second input shaft II | 1 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A,
but eccentric wheel 1.1 also circulates to the right at 1,000 rpm = B
The resultant of A and B = 1 rpm to the right = n of output shaft III

Example 6

| first input shaft I | 1,000 rpm to the right |
|---|---|
| second input shaft II | 1 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A,
but eccentric wheel 1.1 also circulates to the right at 1,000 rpm = B
The resultant of A and B = 1 rpm to the right = n of output shaft III

Example 7

| first input shaft I | 1,000 rpm to the right |
| second input shaft II | 1 rpm to the right |
| third output shaft III | ? rpm |

relative n of input shaft I with respect to input shaft II = 999 rpm to the right

n of eccentric wheel 1.1 = 999 x 2 = 1,998 rpm to the right so that output shaft III 1,998 ÷ 2 = 999 rpm to the left = A, but eccentric wheel 1.1 also circulates to the right at 1,000 rpm = B

The resultant of A and B = 1 rpm to the right = n of output shaft III

The examples show that the rotational speed and the direction of rotation of the output shaft III are the same as the rotational speed and the direction of rotation of input shaft II, independent of the input shaft I. One could say that the rotating eccentric wheel 1.1 'fixes' the output shaft III with respect to the input shaft II. The input shaft II, which can either stand still, or rotates at a uniform speed, or rotates in an accelerated or decelerated manner, thus controls the movements, including the standstill, of the output shaft III.

Further properties and/or uses of the transmission are found in starting, driving away and braking.

STARTING AND PARKING POSITION

The VB4D can be started with the output shaft of the motor being fixedly connected with the VB4D via the input shaft I. With a still servomotor of the input shaft II, the output rotational speed of shaft III is zero. A coupling, either dry or wet, is then not needed anymore.

When the servomotor stands still, the vehicle is also blocked. This makes a parking brake unnecessary.

DRIVING AWAY, ACCELERATING

The driving away itself and the acceleration thereof only depend on the available torque. In the high ratios, as with motor revolutions of 1,000 rpm input to 1 rpm output, a 1,000-fold motor torque is available behind the transmission, neglecting approx. 3% of transmission losses. Thus, sporty acceleration can take place, but a fuel-efficient, economical acceleration is also possible. The transmission control then keeps the motor speed at the lowest position necessary for driving away smoothly.

DECELERATING, BRAKING

Similarly to driving away, with the servomotor, it is also possible to reduce speed either forcefully or smoothly to a standstill. Thus, the existing brake provision would not be needed anymore. Technically, not the brake disc and the brake pad are determinative, but the retardation force, the control thereof and the failure analysis and the like. In any case, by use of the VB4D transmission, the use and maintenance of the brakes is reduced.

CRUISING

In one embodiment, the driver can optionally set the VB4D control to economy, sporty or gearshift by pressing a button. Economy continuously adjusts the ratio to the tractive resistance and/or emergency stop command.

In the embodiment of Fig. 17, the toothings on the left part and right part of an eccentric wheel are aligned. By choosing the operative diameters of the eccentric wheel so as to be equal on the left and right, it is achieved that output shaft III stands still when input shaft II stands still.

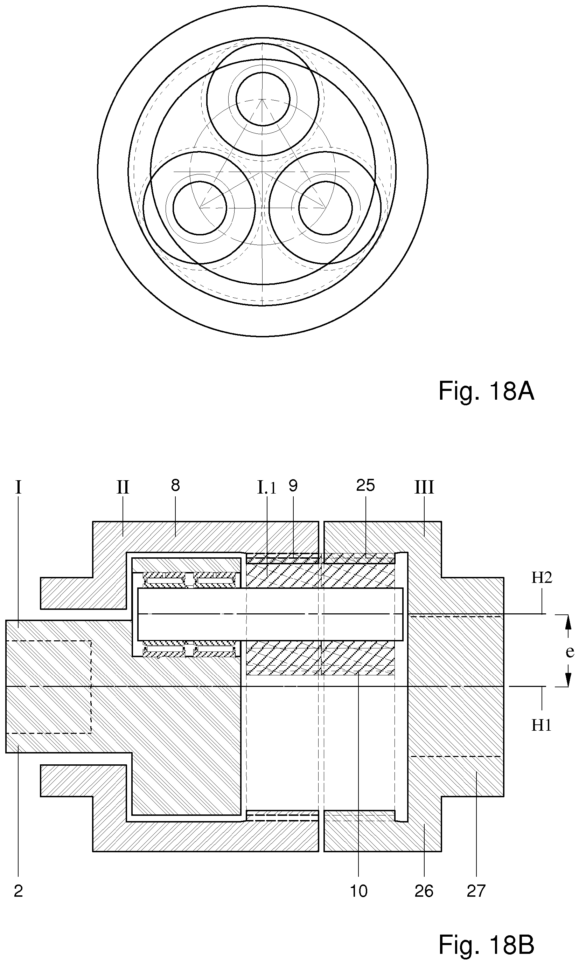

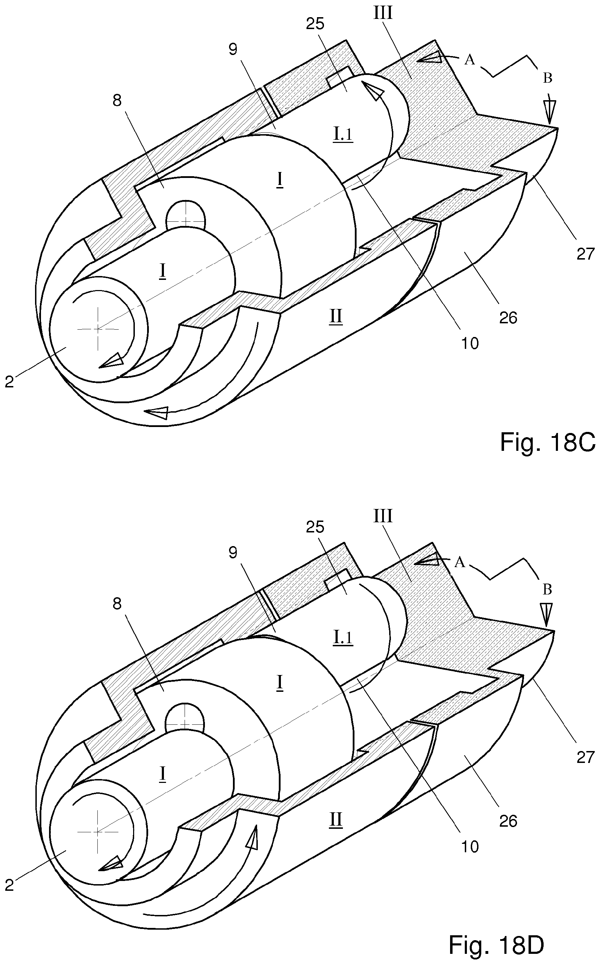

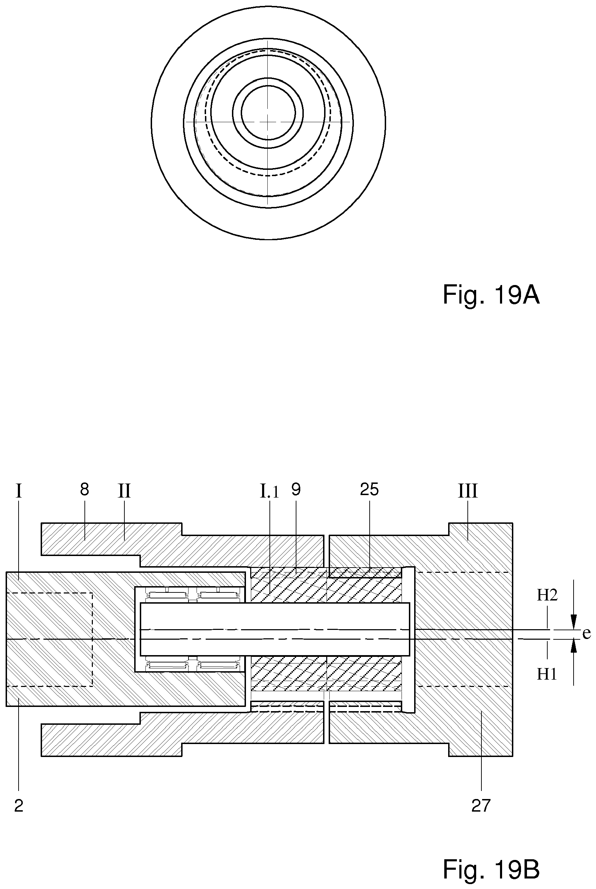

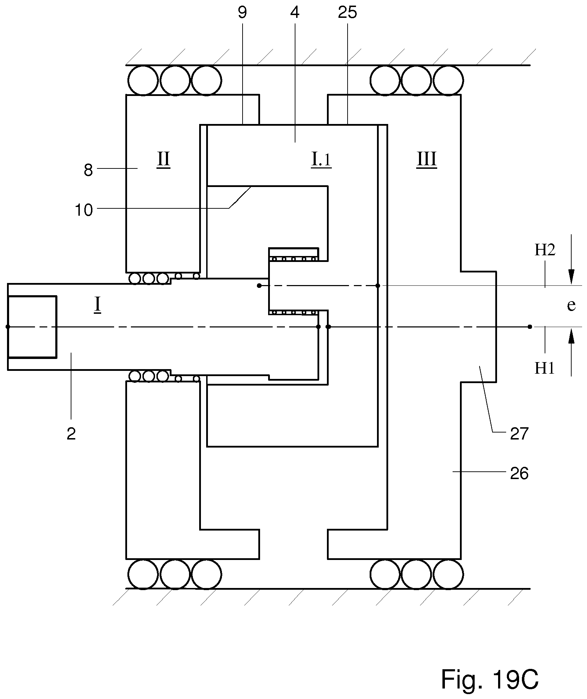

Further embodiments are shown in Fig. 18 and Fig. 19. Fig. 18 relates to a VB4D with internal treads for the shafts II and III. Fig. 18A shows a front view, Fig. 18B shows a cross section. Fig. 18C shows a perspective view of the embodiment with internal treads, the shafts I and II having a same direction of rotation. In Fig. 18D, the direction of rotation of the shafts I and II is opposite. Fig. 19A and Fig. 19B show a front view and a cross section, respectively, of an embodiment with internal treads for the shafts II and III, the eccentricity 'e' being smaller than the diameter of the input shaft I. Fig. 19C shows another exemplary embodiment of the VB4D with small eccentricity 'e'. Due to the small eccentricity, the eccentric wheel 1.1 needs to be led 'around' the shaft I for being able to continue to carry out its function in the same manner.

Calculation examples with Fig. 18C.

Tread diameters: input shaft II = output shaft III (fixed condition)

Eccentric wheel 1.1 = 0.5 x input and output shafts II and III = ratio 2 (no fixed condition, 'accidentally' holds in this example)

Eccentric wheel 1.1 = eccentric wheel I.2-I.n (fixed condition if more than one eccentric wheel is used)

Left tread diameter of eccentric wheel 1.1 = Right tread diameter of eccentric wheel 1.1, with identical toothing position.

Example 8

| | |
|---|---|
| first input shaft I | 1,000 rpm to the right |
| second input shaft II | 0 rpm |
| third output shaft III | ? rpm |

relative n of input shaft I with respect to input shaft II = 1,000 rpm to the right
n of eccentric wheel 1.1 = 1,000 x 2 = 2,000 rpm to the right so that output shaft III 2,000 ÷ 2 = 1,000 rpm to the left = A, but eccentric wheel I.1 also circulates to the right at 1,000 rpm = B
The resultant of A and B = 0 rpm = n of output shaft III

Example 9

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A, but eccentric wheel I.1 also circulates to the right at 1,000 rpm = B
The resultant of A and B = 1 rpm to the right = n of output shaft III

Example 10

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A, but eccentric wheel 1.1 also circulates to the right at 1,000 rpm = B
The resultant of A and B = 1 rpm to the right = n of output shaft III

Example 11

| | |
|---|---|
| first input shaft I | 1,000 rpm to the right |
| second input shaft II | 1 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A, but eccentric wheel 1.1 also circulates to the right at 1,000 rpm = B
The resultant of A and B = 1 rpm to the right = n of output shaft III

Example 12

| first input shaft I | 1,000 rpm to the right |
| --- | --- |
| second input shaft II | 1 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A, but eccentric wheel 1.1 also circulates to the right at 1,000 rpm = B
The resultant of A and B = 1 rpm to the right = n of output shaft III

Example 13

| first input shaft I | 1,000 rpm to the right |
| --- | --- |
| second input shaft II | 1 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A, but eccentric wheel 1.1 also circulates to the right at 1,000 rpm = B
The resultant of A and B = 1 rpm to the right = n of output shaft III

Example 14

| first input shaft I | 1,000 rpm to the right |
| --- | --- |
| second input shaft II | 1 rpm to the right |
| third output shaft III | ? rpm |

relative n of input shaft I with respect to input shaft II = 999 rpm to the right
n of eccentric wheel 1.1 = 999 x 2 = 1,998 rpm to the right so that output shaft III 1,998 ÷ 2 = 999 rpm to the left = A, but eccentric wheel 1.1 also circulates to the right at 1,000 rpm = B
The resultant of A and B = 1 rpm to the right = n of output shaft III
In the exemplary embodiments shown in Fig. 18 and Fig. 19, eccentric wheel 1.1 rotates oppositely with respect to the rotation of the input shaft I as a result of the internal treads. The examples 8-14 also show that, also in these exemplary embodiments, the rotational speed and the direction of rotation of the output shaft III are the same as the rotational speed and direction of rotation of the input shaft II.
An additional advantage of the eccentric wheels can be seen in two functions that the eccentric wheels have.
A first function is forming a 'rolling lock' between tread 9 and tread 25, connected by the eccentric wheel I.1 in a ratio of 1 : 1. Multiple eccentric wheels can be seen as a cage comprising both surfaces 9 and 25 and fixes them with respect to each other. Then, the 'bars' of the cage are the eccentric wheels (pinions) which can each rotate freely about their own axis. The cage is part of I and is driven by the main motor which is connected with I. If nothing else happens now, the main motor cannot exert any force on the output shaft III.
A second function is that of 'rigid coupling in axial direction' for passing the torque of the main motor on to the shaft III. In order to make this possible, the (servo) drive of input shaft II can be used. The output shaft III starts to rotate along with the input (servo) shaft II and leaves its neutral situation. The total drive power and torque are provided by the main motor if the (servo)motor is fed by the main motor via a power splitter. The total drive power and torque can also be formed from the main motor, for instance a diesel engine, and an extra power source such as for instance one or more electric motors as a (servo) drive of the input shaft II.

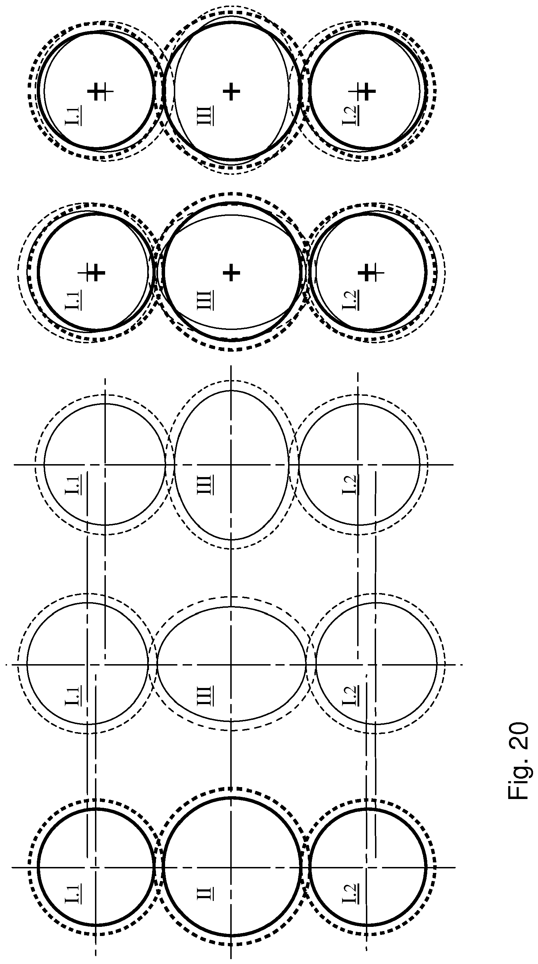

Fig. 20 illustrates an embodiment in which a 1 : 1 transmission ratio is met, but where the shafts II and III have different diameters at the revolving surfaces with the wheels I.1-I.n. In this exemplary embodiment, the output shaft III then has an elliptic shape. The positions of the centerlines of the eccentric wheels I.1-I.n at the location of shaft III differ from the positions of the centerlines at the location of the shaft II. The right side of the eccentric wheel is the side of the output shaft III, and the left side of the eccentric wheel is the side of the input shaft II. Fig. 20 shows a side elevational view of the left side of the eccentric wheel, the right side in the highest position, the right side in the lowest position, and further a front view with the right side in the highest position and a front view with the right side in the lowest position.

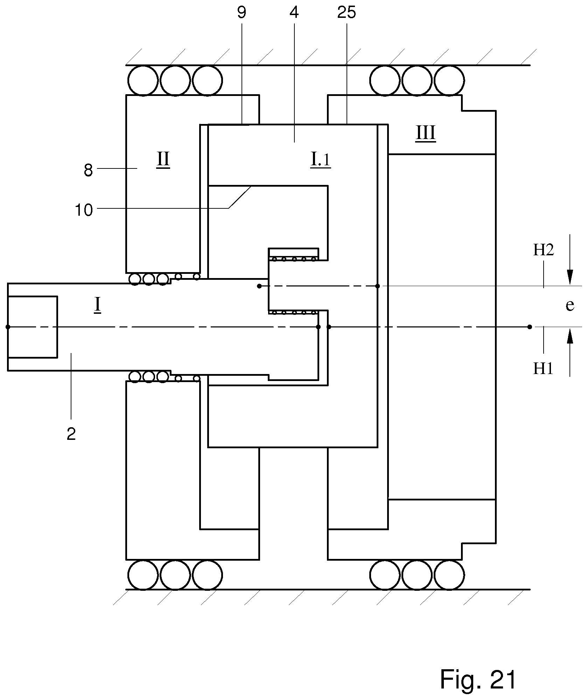

Fig. 21 shows an exemplary embodiment in which a central opening has been made in output shaft III. This makes the eccentric wheel 1.1 accessible for a second output shaft. This second output shaft then moves through the eccentric path with which the wheel I.1 rotates about the centerline H1 of the input shaft I. So, so many eccentric output shafts can be used that there are eccentric wheels, in addition to the central output shaft III. This applies to, for instance, mixing or stirring actions.

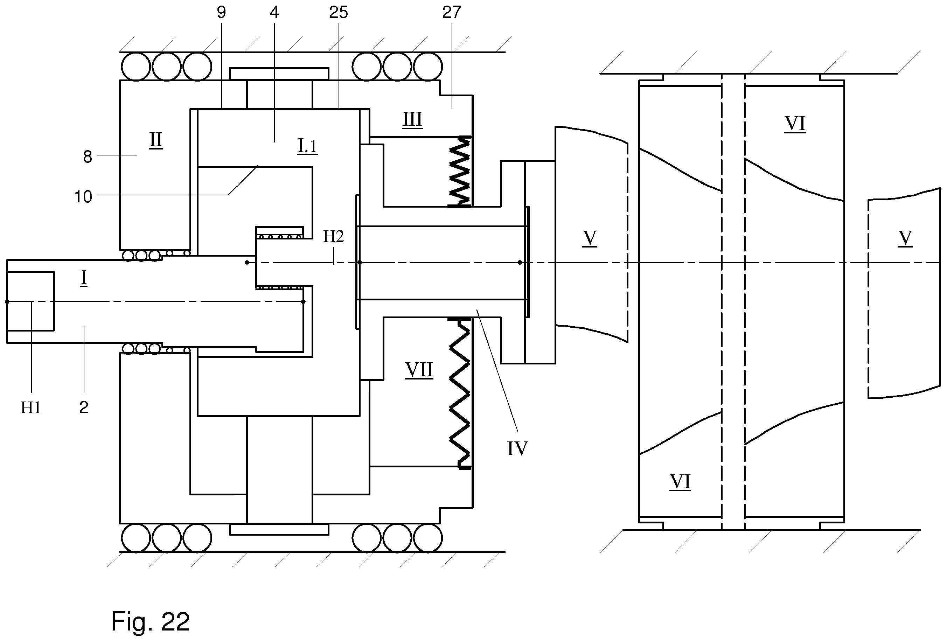

Fig. 22 shows an exemplary embodiment in which such an eccentric output shaft IV is provided. This variator may also be used as, for instance, a pump. Fig. 22 also shows the starting stub of the pump rotor V, the input of the stator VI, the output of the stator VI and the end stub of the rotor V. VII shows a sealing membrane.

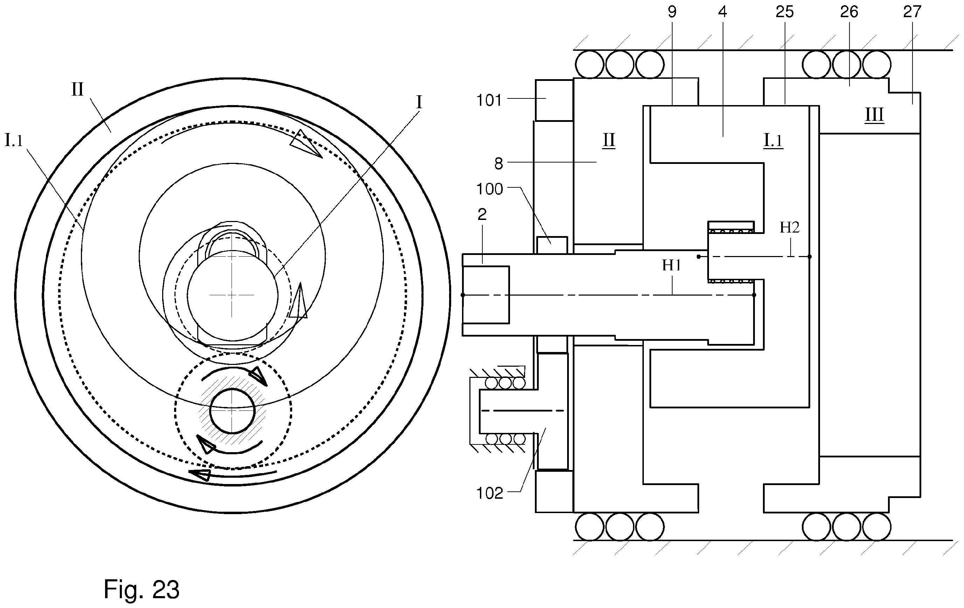

Fig. 23 also shows a variator with a central opening in output shaft III. However, this embodiment is provided with a replacement of the external servo drive of the second input shaft II. With one revolution of I, 1.1 makes more than one revolution around its own axis H2, namely in the ratio of diameter II ÷ diameter I.1. In order to also obtain one rotation of a wheel I.1 for one revolution of the rotor I, a (servo)motor can compensate for this in order to still obtain a 1 : 1 ratio between II and I.1. Because this is desired as a fixed condition, the (servo)motor with fittings and control may optionally be omitted and be replaced by a less expensive fixed drive from the input shaft I to the second input shaft II. To this end, the first input shaft I is provided with a toothed ring 100 and the second input shaft with a toothed ring 11. Between the two treads of 100 and 11, there is a freely rotating pinion 12, which is bearing-mounted in a foundation or a housing of the transmission. The variety of diameters makes it possible that the above-mentioned compensation can be realized for any pump eccentricity. If, for instance, an eccentric (auxiliary) agitating gear is driven, then the servomotor can be used as a drive of the second input shaft II, so that the agitating gear can rotate at a variable speed with respect to the first shaft I and the output shaft III. Further, the output shaft III itself may, for instance, also be an agitating gear. Also, more than one eccentric (auxiliary) agitating gear may be driven.

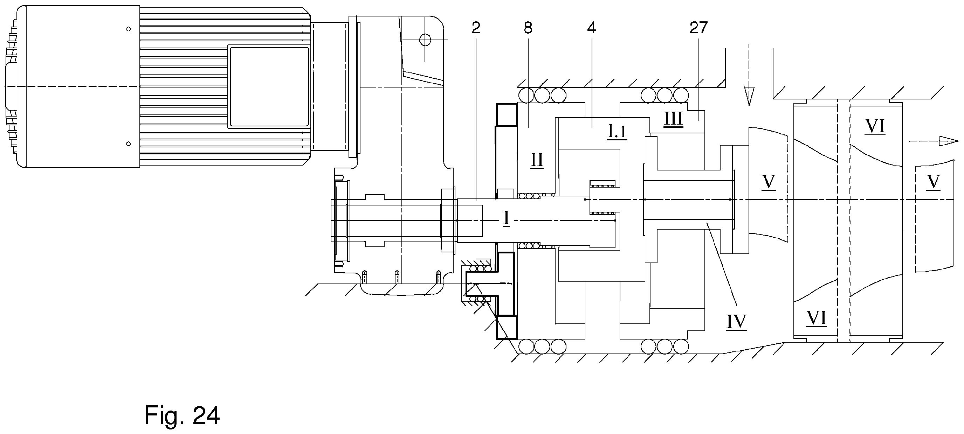

Fig. 24 shows a transmission with a drive motor of the first input shaft I and an eccentric output shaft IV. By designing the rotor as in the exemplary embodiment of Fig. 24, the rotor movement is not caused by the stator, but is created 'autonomously' from the rotor drive. The autonomous rotor movement provides a contactless operation of the rotor within the stator with the result that, with little play with respect to each other, the rotor and the stator form the axially progressively moving cavities in which gas and air are contactlessly - and in a dry-running manner - pumpable.

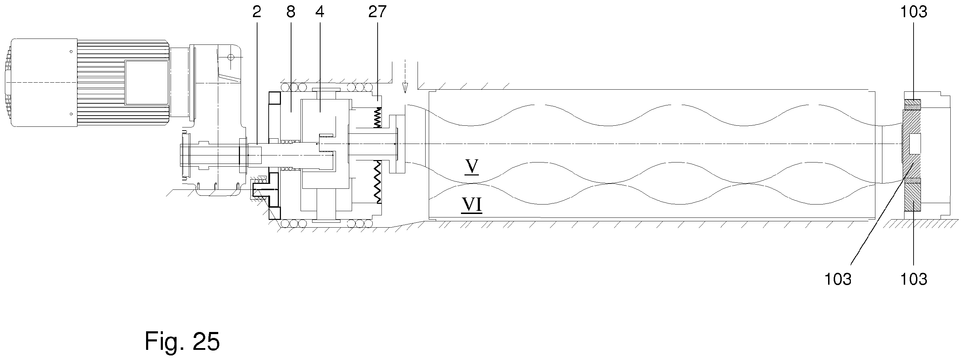

Fig. 25 shows a complete pump, provided with a transmission. The auxiliary provision 13 is a demountable suspension bearing for the rotor for preventing sagging of the rotor.

A transmission according to the invention can output both a variable and a fixed rotational speed in a continuous way. Further, it is possible to couple more than one output shaft to the transmission. These output shafts move with respect to one another at either a fixed or a variable rotational speed.

It will be clear that the invention is not limited to the exemplary embodiments shown herein, but that many variations are possible within the scope of the invention as described in the following claims.

**Claims**

1.  A transmission (1), comprising a rotary shaft (2) for coupling with a first drive element (Drive 1), provided with a first gear wheel (4) supported eccentrically and freely rotatably on the rotary shaft (2), further comprising a second gear wheel (8) arranged concentrically and rotatably with respect to the rotary shaft (2), which second gear wheel (8) is provided with a tread (9) cooperating with the tread (10) of the first gear wheel (4) and the second gear wheel is fed using a second drive (Drive 2) such that rotation of the rotary shaft (2) results in a corresponding circular revolving movement of the first gear wheel (4) about the centerline (H1) of the rotary shaft (2), while rotation of the first gear (4) about its own axis (H2) depends on the rotation of the rotary shaft (2) and on the rotation of the second gear wheel (8) about the centerline (H1) of the rotary shaft (2), wherein a third wheel (4A) is coupled with the first gear wheel (4)via an axial continuation and said third wheel (4A) further cooperates with an auxiliary gear wheel (C) arranged concentrically with the rotary shaft (2) in a different transmission ratio as the second gear wheel (8) cooperates with the first gear wheel (4), **characterized in that** the auxiliary gear wheel (C) is designed as an intermediate auxiliary gear wheel (C), and that the transmission is completed with a mirrored portion comprising a fourth gear wheel (C2) forming one whole with the auxiliary gear wheel (C), a fifth gear wheel (4d) supported eccentrically and freely rotatably on the shaft (2), and a sixth gear wheel (8a) arranged concentrically and rotatably with respect to the rotary shaft (2), which sixth gear wheel (8a) is provided with a tread (9a) cooperating with the tread (10d) of the fifth gear wheel (4d), and the sixth gear wheel (8A) serves the purpose of driving outgoing axis (27d), wherein a seventh gear wheel (4B) is coupled with the fifth gear wheel (4d)via an axial continuation, and the seventh wheel (4b) further cooperates with the fourth wheel (C2) arranged concentrically with the rotary shaft (2) in a different transmission ratio as the sixth gear wheel (8A) cooperates with the fifth gear wheel (4d).

2. A transmission (1) according to claim 1, wherein the second gear wheel (8) and the auxiliary gear wheel (C) are arranged in an axially spaced manner.

**Patentansprüche**

1. Getriebe (1), umfassend eine Radialwelle (2) zum Koppeln mit einem ersten Antriebselement (Drive 1), versehen mit einem ersten Getrieberad (4), exzentrisch gestützt und frei drehbar auf der Radialwelle (2), ferner umfassend ein zweites Getrieberad (8), konzentrisch angeordnet und drehbar in Bezug auf die Radialwelle (2), welches zweite Getrieberad (8) mit einer Lauffläche (9) versehen ist, die mit der Lauffläche (10) des ersten Getrieberads (4) zusammenarbeitet, und das zweite Getrieberad unter Verwendung eines zweiten Antriebs (Drive 2) so geführt wird, dass die Drehung der Radialwelle (2) in einer entsprechenden kreisförmigen umlaufenden Bewegung des ersten Getrieberads (4) um die Mittellinie (H1) der Radialwelle (2) resultiert, während die Drehung des ersten Getrieberads (4) um seine eigene Achse (H2) von der Drehung der Radialwelle (2) und von der Drehung des zweiten Getrieberads (8) um die Mittellinie (H1) der Radialwelle (2) abhängt, wobei ein drittes Rad (4A) über eine axiale Fortsetzung mit dem ersten Getrieberad (4) gekoppelt ist und das dritte Rad (4A) ferner mit einem Hilfsgetrieberad (C) zusammenarbeitet, das konzentrisch mit der Radialwelle (2) in einem anderen Übertragungsverhältnis zusammenarbeitet als das zweite Getrieberad (8) mit dem ersten Getrieberad (4) zusammenarbeitet, **dadurch gekennzeichnet, dass** das Hilfsgetrieberad (C) als ein Zwischenhilfsgetrieberad (C) konzipiert ist und dass das Getriebe durch einen gespiegelten Abschnitt ergänzt wird, der ein viertes Getrieberad (C2), das ein Ganzes mit dem Hilfsgetrieberad (C) bildet, ein fünftes Getrieberad (4d), exzentrisch gestützt und frei drehbar auf der Welle (2), und ein sechstes Getrieberad (8a), konzentrisch angeordnet und drehbar in Bezug auf die Radialwelle (2) umfasst, welches sechste Getrieberad (8a) mit einer Lauffläche (9a) versehen ist, die mit der Lauffläche (10d) des fünften Getrieberads (4d) zusammenarbeitet, und das sechste Getrieberad (8a) dem Zweck dient, die Ausgangsachse (27d) anzutreiben, wobei ein siebtes Getrieberad (4b) über eine axiale Fortsetzung mit dem fünften Getrieberad (4d) gekoppelt ist und das siebte Rad (4b) ferner mit dem vierten Rad (C2), konzentrisch mit der Radialwelle (2) angeordnet, in einem anderen Übertragungsverhältnis zusammenarbeitet als das sechste Getrieberad (8a) mit dem fünften Getrieberad (4d) zusammenarbeitet.

2. Getriebe (1) nach Anspruch 1, wobei das zweite Getrieberad (8) und das Hilfsgetrieberad (C) in einem axialen Abstand angeordnet sind.

**Revendications**

1. Transmission (1), comprenant un arbre rotatif (2) à relier à un élément d'entraînement (Entraînement 1), muni d'une première roue dentée (4) supportée excentriquement et librement rotative sur l'arbre rotatif (2), comprenant de plus une deuxième roue dentée (8) agencée concentriquement et de manière rotative par rapport à l'arbre rotatif (2), laquelle deuxième roue dentée (8) est munie d'une bande de roulement (9) coopérant avec la bande de roulement (10) de la première roue dentée (4) et la deuxième roue dentée est mise en oeuvre en utilisant un second entraînement (Entraînement 2) de telle sorte qu'une rotation de l'arbre rotatif (2) a pour résultat un mouvement de révolution circulaire correspondant de la première roue dentée (4) autour de l'axe central (H1) de l'arbre rotatif (2), alors qu'une rotation de la première roue dentée (4) autour de son propre axe (H2) est fonction de la rotation de l'arbre rotatif (2) et de la rotation de la deuxième roue dentée (8) autour de l'axe central (H1) de l'arbre rotatif (2), une troisième roue (4A) étant reliée à la première roue dentée (4) via une un prolongement axial et ladite troisième roue (4A) coopère de plus avec une roue dentée auxiliaire (C) agencée concentriquement à l'arbre rotatif (2) dans un rapport de transmission différent lorsque la deuxième roue dentée (8) coopère avec la première roue dentée (4), **caractérisée en ce que** la roue dentée auxiliaire (C) est conçue comme une roue dentée auxiliaire intermédiaire (C), et **en ce que** la transmission est terminée avec une partie en miroir comprenant une quatrième roue dentée (C2) formant un tout avec la roue dentée auxiliaire (C), une cinquième roue dentée (4d) supportée de manière excentrée et librement rotative sur l'arbre (2) et une sixième roue dentée (8a) agencée concentriquement et de manière rotative par rapport à l'axe de l'arbre rotatif (2), laquelle sixième roue dentée (8a) est munie d'une bande de roulement (9a) coopérant avec la bande de roulement (10d) de la cinquième roue dentée (4d) et la sixième roue dentée (8A) sert dans le but d'entraîner un axe sortant (27d), dans laquelle une septième roue dentée (4B) est reliée à la cinquième roue dentée (4d) via un prolongement axial, et la septième roue (4b) coopère en outre avec la quatrième roue (C2) agencée concentriquement à l'arbre rotatif (2) dans un rapport de transmission différent lorsque la sixième roue dentée (8A) coopère avec la cinquième roue dentée (4d)

2. Transmission (1) selon la revendication 1, dans laquelle la deuxième roue dentée (8) et la roue dentée auxiliaire (C) sont agencées d'une manière espacées axialement.

Fig. 1

Fig. 2

Fig. 3

Fig. 4

Fig. 4.1

Fig. 4.2

Fig. 5

Fig. 5A

Fig. 6

Fig. 7

30

32

31

16

0° 90° 180° 270° 360° 450° 540° 630° 720°

45° 135° 225° 315° 405° 495° 585° 675°

0° 45° 90° 135° 180° 225° 270° 315° 360°

2x e

1x e

D

d

EP 2 433 030 B1

25

Fig. 8

Fig. 9

Fig. 10

Fig. 11

Fig. 12

Fig. 13

EP 2 433 030 B1

Fig. 14A

Fig. 14B

29

Fig. 15A

Fig. 15B

Fig. 16A

Fig. 16B

Fig. 16C

Fig. 16D

Fig. 17A

Fig. 17B

Fig. 18A

Fig. 18B

Fig. 18C

Fig. 18D

Fig. 19A

Fig. 19B

Fig. 19C

Fig. 20

9  4  25

II

8

I.1

III

10

H2

e

I

H1

2

Fig. 21

Fig. 22

EP 2 433 030 B1

Fig. 23

EP 2 433 030 B1

Fig. 24

EP 2 433 030 B1

103

103

103

V

VI

27

4

8

2

Fig. 25

Fig. 26

Fig. 26A

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006123927 A